# FASCICULE DE BREVET EUROPEEN

(11) **EP 3 488 301 B1**
(45) Date de publication et mention de la délivrance du brevet: **08.06.2022**
(21) Numéro de dépôt: 17751804.0
(22) Date de dépôt: 20.07.2017
(51) Int. Cl.: G05B 15/02, G05B 23/02, H04L 12/28

(54) **PROCÉDÉ DE CONFIGURATION ET DE SUPERVISION D'UNE INSTALLATION DOMOTIQUE**
VERFAHREN ZUR KONFIGURATION UND ÜBERWACHUNG VON HEIMAUTOMATISIERUNGSAUSRÜSTUNG
METHOD FOR CONFIGURING AND MONITORING HOME AUTOMATION EQUIPMENT

(30) Priorité: 22.07.2016 FR 1656996
(43) Date de publication de la demande: 29.05.2019
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2017/051981
(87) Numéro de publication internationale: WO 2018/015670

(56) Documents cités:
- US-A1- 2008 143 517
- US-A1- 2008 281 472
- US-A1- 2011 046 792
- US-A1- 2014 266 671
- US-B2- 8 781 633

## Description

La présente invention concerne un procédé de configuration et de supervision d'une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Une pluralité de dispositifs domotiques appartenant à plusieurs installations domotiques distinctes peut être supervisée ou maintenue par des opérateurs de maintenance. Ceux-ci doivent procéder à des opérations de maintenance préventive ou de réparation lors d'un disfonctionnement d'un dispositif.

Ces opérations nécessitent des déplacements pour procéder aux opérations, ainsi qu'une surveillance sur site ou à distance qui demande un temps important. De ce fait, il est possible que les opérations de maintenance ou de réparation ne soient pas exécutées dans un délai satisfaisant en raison du nombre de dispositifs à superviser. Il est également possible que les opérations ne correspondent pas à une situation nécessitant cette intervention. En effet, pour que la supervision soit efficace, il convient que les opérateurs de maintenance soient en mesure de prévoir et de détecter la survenance d'un disfonctionnement sur la base des informations communiquées et/ou de leur évolution, ce qui nécessite une interprétation complexe desdites informations de supervision.

Le document D1 (US 8 781 633 B2) divulgue un procédé et un système de surveillance et de contrôle à distance, de différents services (chauffage, alimentation en eau, gaz, électricité, etc...) liés au fonctionnement d'un ou plusieurs bâtiments ou installations, rendu accessible, via un réseau étendu, à plusieurs catégories différentes d'utilisateurs distants.

Le document D2 (US 2008/0281472 A1) divulgue un système de commande et de surveillance à distance d'une installation domotique.

Mais ni D1 ni D2 ne divulguent comment contrôler et mettre à jour les éléments de contrôle qui permettent la supervision et la maintenance de dispositifs domotiques en limitant les ressources nécessaires sur l'unité de gestion lors de l'exécution. D1 et D2 ne divulguent pas non plus comment cibler de manière rapide, un type de réparateur spécifique pour recevoir une notification de maintenance d'un équipement domotique.

La présente invention a pour but de résoudre tout ou partie des inconvénients mentionnés ci-dessus.

### Exposé de l'invention

A cet effet, la présente invention concerne un procédé de configuration d'une unité de gestion reliée à au moins une installation domotique comprenant au moins un dispositif domotique et au moins une unité centrale de commande, le procédé étant mis en oeuvre par une unité de gestion et comprenant les étapes suivantes :
- Configuration d'une alerte correspondant au déclenchement d'une notification d'alerte et/ou d'une action lors de la réalisation d'une condition de déclenchement portant sur au moins une variable d'état pour un dispositif domotique, un groupe de dispositifs domotiques, un type de dispositif domotique ou un groupe de types de dispositifs domotiques ; l'étape de configuration d'une alerte étant réalisée sur la base d'au moins une instruction d'un premier utilisateur possédant un profil utilisateur d'un premier type ;
- Enregistrement de la déclaration de la supervision d'un ensemble de dispositifs domotiques comprenant au moins un dispositif domotique par un deuxième utilisateur possédant un profil utilisateur d'un deuxième type ;
- Téléchargement de la condition de déclenchement de l'alerte sur l'au moins une unité centrale de commande à laquelle est rattachée au moins un dispositif domotique pour lequel l'alerte a été configurée, en vue de la configuration de l'unité centrale de commande pour l'évaluation de la condition et de l'émission d'une notification de réalisation de la condition à destination de l'unité de gestion.

Grâce aux dispositions selon l'invention, une notification d'alerte peut être communiquée à un utilisateur du deuxième type lorsque la condition de déclenchement d'une alerte est réalisée, sur la base d'une configuration réalisée par un utilisateur du premier type. Ainsi, la mise en place de la maintenance des dispositifs domotiques est facilitée en limitant ou ciblant de façon plus pertinente les interventions de maintenance ou de réparation sur site.

En effet, le procédé met en oeuvre une configuration qui permet à un premier utilisateur d'un premier type de définir au moins une alerte définissant une condition de déclenchement d'une notification d'alerte destinée à être envoyée à l'utilisateur possédant un profil du deuxième type lorsque la condition de déclenchement est remplie pour un dispositif compris dans l'ensemble associé à l'utilisateur possédant un profil du deuxième type. Un utilisateur expert du premier type peut ainsi définir des alertes pertinentes pour des types de dispositifs, de façon à ce que les utilisateurs du deuxième type puissent être alertés à bon escient en cas de prévision d'un dysfonctionnement et optimiser ainsi les opérations de maintenance. Il est à noter que l'on entend par configuration la création ou la mise à jour d'une alerte.

L'évaluation de la condition sur une unité centrale de commande permet de limiter les ressources nécessaires sur l'unité de gestion et les communications réseau lors de l'exécution.

Selon une première possibilité, l'étape de configuration est réalisée lorsqu'un certain nombre de dispositifs domotiques sont installés et rattachés à des unités centrales de commande. Dans ce cas, l'unité de gestion peut déterminer les dispositifs concernés dans les installations domotiques, déterminer les unités centrales de commandes concernées, puis déclencher le téléchargement sur au moins une unité centrale de commande concernée. Selon une deuxième possibilité, lorsqu'un dispositif domotique est rattaché à une unité centrale de commande, ou lors d'une mise en service ou mise à jour de ladite unité centrale de commande, le rattachement du dispositif domotique est signalé à l'unité de gestion. L'unité de gestion peut alors déterminer les conditions des alertes déjà définies qui s'appliquent au dispositif domotique, puis procéder au téléchargement de la condition correspondante.

Les étapes du procédé impliquent que le téléchargement de la condition soit effectué après la configuration de l'alerte et de la condition correspondante. L'étape d'enregistrement de la déclaration de la supervision d'un ensemble comprenant au moins un dispositif par un utilisateur du second type peut être effectuée avant ou après chacune des étapes de configuration et de téléchargement.

Une alerte correspond au déclenchement d'une notification d'alerte et/ou d'une action lors de la réalisation d'une condition de déclenchement portant sur au moins une variable d'état pour un dispositif domotique, un type de dispositif domotique ou une liste de types de dispositifs domotiques.

La condition de déclenchement contient une référence à au moins une variable d'état d'un dispositif. La condition de déclenchement peut aussi prendre en compte une ou plusieurs variables externes, correspondant par exemple à une valeur affectée par défaut et personnalisable par instance de dispositif. La condition de déclenchement peut également prendre en compte des valeurs précédentes d'une ou plusieurs variables d'état de dispositifs, en exploitant une capacité d'historisation de l'unité de gestion afin de mettre en place un algorithme et par exemple, d'estimer une vitesse de variation en détermination une dérivée ou de procéder à une détection d'anomalie par analyse statistique.

La condition de déclenchement peut être associée à une notion d'hystérésis temporelle ou d'hystérésis à effet de seuil sur la variation d'un ou plusieurs paramètres mesurés. Cette hystérésis permet de ne pas déclencher une alerte de façon abusive lorsque les paramètres mesurés sont sujets à fluctuation.

La condition de déclenchement de l'alerte peut être définie sous la forme d'une expression d'un langage évaluable, interprété ou compilé, par le serveur.

Ce langage peut être un langage simple permettant de décrire des expressions booléennes, en comprenant en particulier des opérateurs de comparaison et des opérateurs booléens, ou un langage de programmation complet.

Une alerte peut être associée à un niveau d'alerte ou niveau de priorité de l'alerte ; A titre d'exemple, une alerte peut correspondre à un niveau d'information ou à une alerte concernant un problème bloquant sur l'installation.

Une notification d'alerte correspond ainsi à un envoi d'information relatif au déclenchement d'une alerte à un utilisateur, selon un mode de communication variable. Les notifications d'alerte peuvent être communiquées au fil de l'eau ou collectée dans une interface que l'utilisateur peut consulter lorsqu'il le souhaite. Une combinaison de différents modes de communication de la notification d'alerte peut également être mise en place. Ainsi, le mode de communication pour les notifications d'alerte peut être divers, par exemple par SMS, par email, ou sur une interface de communication dédiée.

Il est possible d'être notifié sur l'apparition de l'alerte mais aussi sur le retour à la normale en détectant lorsque la condition de déclenchement est remplie, mais également d'obtenir une notification d'alerte lorsque la condition cesse d'être remplie.

Une action peut être définie en cas de réalisation de la condition, correspondant par exemple à une commande sur un dispositif, en particulier un réglage / la mise en place d'un mode dégradé, ou encore une mise hors service ou un blocage du dispositif.

Selon un aspect de l'invention, l'unité de gestion est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Le ou les premiers utilisateurs possédant un premier type de profil correspondent à un utilisateur expert qui crée l'alerte. Ce premier type de profil d'utilisateur dispose de droits étendu sur l'ensemble des dispositifs d'un type donné. Il peut s'agir notamment du fabricant des dispositifs ou d'un distributeur des dispositifs domotiques.

Le ou les deuxièmes utilisateurs possédant un deusième type de profil correspondent à un utilisateur qui peut s'abonner à une alerte. Il peut s'agir notamment d'un installateur ou d'un agent de maintenance qui possède des droits sur des dispositifs qu'il doit superviser, notamment à distance.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un type de dispositifs domotiques correspond à une catégorie de dispositifs identiques, similaires ou partageant des caractéristiques et au moins une définition d'une variable d'état. A titre d'exemple, un type peut correspondre à un modèle particulier de volet roulant, d'alarme ou de portail.

Selon un aspect de l'invention, le procédé comprend une étape de configuration d'une alerte correspondant au déclenchement d'une notification d'alerte et/ou d'une action lors de la réalisation d'une condition de déclenchement portant sur au moins une variable d'état pour le type de dispositif domotique ou le groupe de types de dispositifs domotiques; l'étape de configuration d'une alerte étant réalisée sur la base d'au moins une instruction d'un premier utilisateur possédant un profil utilisateur d'un premier type. Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques.

Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique en vue de la réalisation d'une action par ce dispositif ou de l'obtention en retour d'une information, par exemple d'une information relative à une variable d'état de ce dispositif.

Selon un aspect de l'invention, l'étape de déclaration est effectuée sur la base d'instructions du deuxième utilisateur. Selon un autre aspect de l'invention, l'étape de déclaration peut également être effectuée de façon automatique sur la base d'une liste d'utilisateurs du deuxième type et des dispositifs associés.

Selon un aspect de l'invention, le procédé comprend une étape de configuration de l'unité de gestion correspondant à l'enregistrement d'une correspondance entre :
- un type ou un identifiant de notification d'alerte de réalisation d'une condition, d'une part, et
- une alerte, un type d'alerte ou une notification d'alerte utilisateur à envoyer à un utilisateur du deuxième type, à réception de la notification de réalisation d'une condition correspondant au type au à l'identifiant considéré, d'autre part.

Ainsi, la correspondance entre une alerte et une condition est prise en compte au niveau de l'unité de gestion.

Le procédé comprend en outre l'étape suivante :
- Enregistrement d'une première correspondance entre ladite alerte et ledit dispositif domotique, ledit groupe de dispositifs domotiques, ledit type de dispositif domotique ou ledit groupe de types de dispositifs domotiques ;

Le procédé comprend également l'étape suivante :
- Enregistrement d'une deuxième correspondance entre l'au moins un dispositif appartenant à l'ensemble de dispositifs domotiques et le deuxième utilisateur.

Selon un aspect de l'invention, le procédé comprend en outre l'étape suivante :
- Définition d'une configuration personnalisée d'une alerte attachée à un dispositif ou un groupe de dispositif, par le deuxième utilisateur possédant un profil utilisateur d'un deuxième type.

Un utilisateur du premier type peut définir la condition de façon variable. Un utilisateur du deuxième type peut alors modifier des alertes créées par un utilisateur du premier type pour les dispositifs dont il a la supervision.

A titre d'exemple, une condition peut être définie par un utilisateur du premier type avec un seuil variable, associé optionnellement à une contrainte. Par exemple, le seuil pourrait être modifié entre les bornes d'un intervalle. Dans ce cas, la configuration personnalisée peut correspondre à un choix de valeur de seuil dans une condition, en donnant une valeur de seuil personnalisée, comprise entre les bornes de l'intervalle.

Selon un aspect de l'invention, dans le cas où la condition de l'alerte est personnalisée, cette condition est téléchargée sur l'unité centrale à laquelle est rattachée l'au moins un dispositif concerné.

Selon un aspect de l'invention, le procédé comprend en outre l'étape suivante :
- Mise à disposition de l'utilisateur possédant un profil d'un premier type d'une première interface de configuration d'une Alerte et de la condition de déclenchement correspondante.

Selon un aspect de l'invention, la première interface est agencée pour permettre la sélection des types de dispositifs et/ou des variables d'état pour configurer une alerte et/ou la condition de déclenchement correspondante.

Selon un aspect de l'invention, le procédé comprend en outre l'étape suivante :
- Mise à disposition de l'utilisateur possédant un profil d'un deuxième type d'une deuxième interface de sélection d'installations, de dispositifs / des paramètres ou variables d'état.

Par l'intermédiaire de cette interface, un utilisateur du deuxième type peut notamment procéder à la définition d'un mode de communication pour les notifications d'alerte, par exemple par SMS, par email, ou sur une interface de communication dédiée. Une combinaison de mode de communication peut également être envisagée. A titre d'exemple, une notification SMS ou email peut être envoyée avec un lien vers une page d'une interface de supervision.

L'utilisateur du deuxième type peut également procéder à une définition des notifications d'alertes qu'il souhaite recevoir par type de dispositif mais également par instance de dispositif supervisé.

La seconde interface permet optionnellement de procéder à la configuration personnalisée des alertes.

La présente invention concerne également un procédé de supervision d'une installation domotique comprenant au moins un dispositif domotique et au moins une unité centrale de commande, le procédé étant exécuté par une unité centrale de commande et comprenant les étapes suivantes :
- Réception d'un message de supervision en provenance d'un dispositif domotique, le message de supervision comprenant une information relative à une valeur d'au moins une variable d'état de l'au moins un dispositif domotique ;
- Evaluation d'une condition de déclenchement en fonction de l'information relative à une valeur d'au moins une variable d'état de l'au moins un dispositif domotique ;
- Emission d'au moins un message de notification de réalisation de la condition à destination d'une unité de gestion reliée à ladite installation dans le cas où la condition de déclenchement est réalisée.

Selon un aspect de l'invention, le procédé de supervision comprend les étapes du procédé de configuration sont réalisées préalablement à l'étape de réception d'un message de supervision.

Selon un aspect de l'invention, l'étape de réception d'un message peut être successive à une première étape d'envoi d'un message d'interrogation ou de polling. Alternativement, l'envoi du message peut être initié par le dispositif domotique de façon autonome, par exemple en détectant un évènement modifiant la valeur d'une variable d'état. Le polling peut également être réalisé à l'initiative de l'unité centrale de commande, avant d'envoyer une notification de réalisation de la condition à l'unité de gestion.

Selon un aspect de l'invention, l'étape d'identification du type peut être basée par exemple sur une consultation d'une information envoyée dans le message de supervision, comme un identifiant.

Selon un aspect de l'invention, l'étape de détermination des alertes présentant une condition à évaluer peut être réalisée sur la base des correspondances enregistrées lors de la configuration. Selon un aspect de l'invention, Il est possible de réduire le nombre de conditions à évaluer en considérant la ou des variables d'état concernées par les Condition et en les comparant avec la variable d'état mise à jour.

Selon un aspect de l'invention, une notification de réalisation de la condition peut être associée à un contexte, ou des valeurs à communiquer, et/ou à un niveau d'alerte. En particulier, le message de notification de réalisation de la condition peut comprendre au moins une information de contexte, comme par exemple une valeur de variable d'état ou un niveau d'alerte.

Selon un aspect de l'invention, la condition de déclenchement correspond à une condition de déclenchement d'une alerte, une alerte correspondant au déclenchement d'une notification d'alerte et/ou d'une action lors de la réalisation d'une condition de déclenchement portant sur au moins une variable d'état pour un dispositif domotique, un groupe de dispositifs domotiques, un type de dispositif domotique ou un groupe de types de dispositifs domotiques.

Selon un aspect de l'invention, le procédé comprend en outre l'étape suivante :
- Détermination d'au moins une condition de déclenchement à évaluer pour le dispositif domotique portant sur au moins une variable d'état pour un dispositif domotique ;

Ces dispositions permettent de déterminer une ou plusieurs conditions à évaluer, dans le cas où l'unité centrale de commande est susceptible de recevoir des messages de supervision non pertinents pour l'évaluation de la condition et/ou dans le cas où l'unité centrale de commande est susceptible d'évaluer plusieurs conditions correspondant à plusieurs alertes.

Selon un aspect de l'invention, le procédé de supervision comprend une étape d'identification d'un type du dispositif domotique concerné par le message de supervision, et l'étape de détermination d'au moins une condition à évaluer, est réalisée sur la base du type du dispositif domotique.

La présente invention concerne également un procédé de supervision d'une installation domotique comprenant au moins un dispositif domotique et au moins une unité centrale de commande, le procédé étant exécuté par une d'une unité de gestion reliée à ladite installation et comprenant les étapes suivantes :
- Réception d'un message de notification de réalisation d'une condition en provenance d'une unité centrale de commande, le message de notification de réalisation d'une condition correspondant à la réalisation d'une condition de déclenchement portant sur au moins une variable d'état de l'au moins un dispositif domotique ;
- Détermination d'au moins un utilisateur à notifier en fonction d'une correspondance entre le dispositif et ledit utilisateur ;
- Emission d'au moins un message de notification d'alerte à destination de l'au moins un utilisateur.

Selon un aspect de l'invention, le procédé comprend une étape de détermination du message de notification d'alerte en fonction de la définition d'une alerte correspondant au déclenchement d'une notification et/ou d'une action lors de la réalisation d'une condition de déclenchement portant sur au moins une variable d'état pour un dispositif domotique ou un groupe de dispositifs domotiques,

Selon un aspect de l'invention, l'au moins une condition de déclenchement est configurée par un premier utilisateur possédant un profil d'un premier type, et l'étape de détermination d'un utilisateur à notifier correspond à la détermination d'un deuxième utilisateur d'un deuxième type.

Selon un aspect de l'invention, le serveur peut procéder à une sauvegarde du déclenchement de l'alerte pour constituer un historique des alertes.

Selon un aspect de l'invention, le procédé comprend en outre l'étape suivante :
- Vérification de l'existence d'une configuration propre à l'utilisateur concernant un souhait de réception de notification d'alerte afin de déterminer si une notification d'alerte est envoyée ou non.

Selon un aspect de l'invention, le procédé comprend en outre l'étape suivante :
- Envoi d'un message à l'unité centrale de commande U en vue du déclenchement de l'exécution d'une action, en particulier d'une action sur le dispositif domotique.

Selon un aspect de l'invention, le procédé comprend en outre l'étape suivante :
- Stockage des valeurs de l'au moins une variable d'état.

Ces dispositions permettent une historisation des valeurs des variables d'état et l'évaluation de conditions de déclenchement portant sur plusieurs variables qui ne sont pas envoyées en même temps et/ou de baser des conditions sur un historique de valeurs.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur ;
La figure 3 est un schéma illustrant un mode de mise en oeuvre d'un procédé de configuration d'une installation domotique selon l'invention.
La figure 4 est un schéma illustrant un mode de mise en oeuvre d'un procédé de supervision d'une installation domotique selon l'invention.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

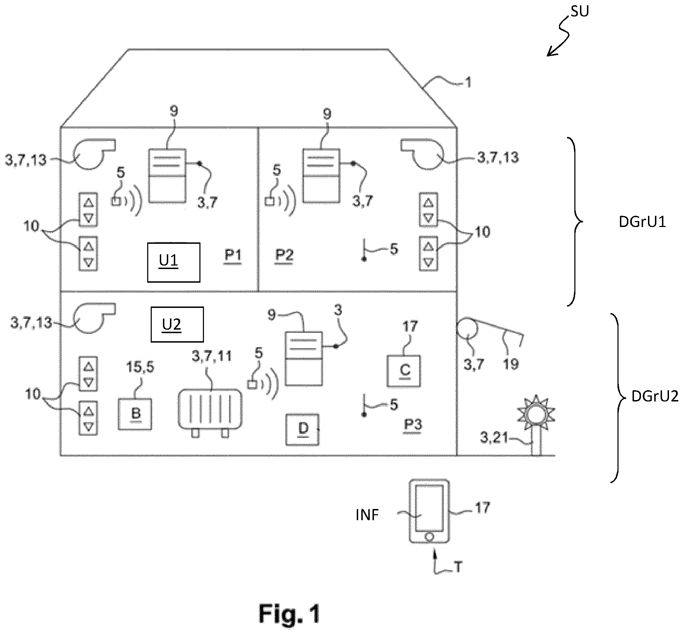

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique SU peut également comprendre un point de commande 15 d'un actionneur 7, comme un boîtier de commande B sans fil pour le volet roulant 9.

L'installation domotique SU peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique SU.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique SU comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation SU formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

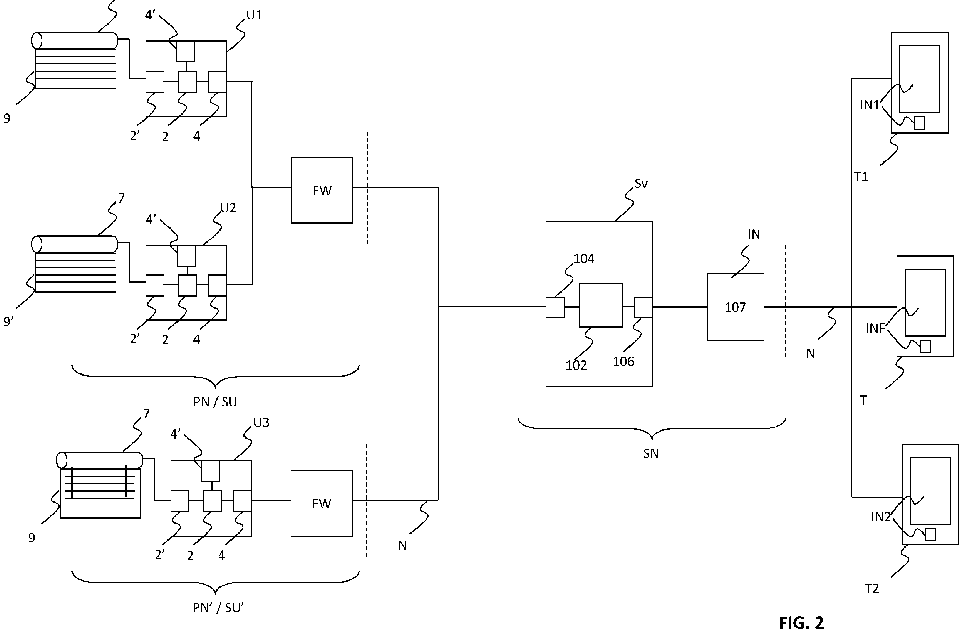

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique SU'. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en oeuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon un deuxième protocole de communication cible P2, avec un terminal de communication mobile T. Le deuxième protocole de communication cible peut par exemple être un protocole de communication au-dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemple incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle INF permettant à un utilisateur final de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle INF comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

### Identifiant unique d'un dispositif domotique

Le serveur Sv et les unités centrales de commandes U peut utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples

1) knx://0201-0001-1234/1.1.3
   Cet identifiant unique DURL correspond à un dispositif D communiquant par le protocole KNX avec une adresse individuelle 1.1.3 accessible par l'unité centrale de commande U portant l'identifiant #0201-0001-1234.
2) io://0201-0001-1234/145036#2
   Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Premier et deuxième types d'utilisateurs

Comme cela est représenté sur la figure 2, le serveur Sv peut communiquer avec des terminaux en possession de deux types d'utilisateurs qui ne sont pas nécessairement le ou les utilisateurs finaux de l'installation SU.

En particulier, le serveur Sv peut interagir avec au moins un premier utilisateur Usr1 possédant un profil utilisateur d'un premier type UsrT1. Le premier type d'utilisateur UsrT1 correspond à un utilisateur expert qui dispose de droits étendus sur l'ensemble des dispositifs D d'un type donné DT. Il peut s'agir notamment du fabricant des dispositifs ou d'un distributeur des dispositifs domotiques concernés.

A cet effet, une interface IN1 est mise à disposition par le serveur Sv. L'accès à cette interface peut être réalisée par une application exécutée sur un terminal utilisateur T1 du premier utilisateur Usr1, ou par un accès par un client léger.

Le serveur Sv interagit également avec au moins un deuxième utilisateur Usr2 possédant un profil utilisateur d'un deuxième type UsrT2. Le deuxième type d'utilisateur Usr2 correspond notamment à un installateur ou à un agent de maintenance qui possède des droits sur des dispositifs qu'il doit superviser, notamment à distance.

A cet effet, une interface IN2 est mise à disposition par le serveur Sv. L'accès à cette interface peut être réalisée par une application exécutée sur un terminal utilisateur T2 du deuxième utilisateur, ou par un accès par un client léger.

Par la suite, nous désignerons par utilisateur du premier type UsrT1 un utilisateur possédant un profil utilisateur du premier type UsrT1 et par utilisateur du deuxième type UsrT2 un utilisateur possédant un profil utilisateur du deuxième type UsrT2.

### Procédé de configuration

### Premier mode de mise en œuvre

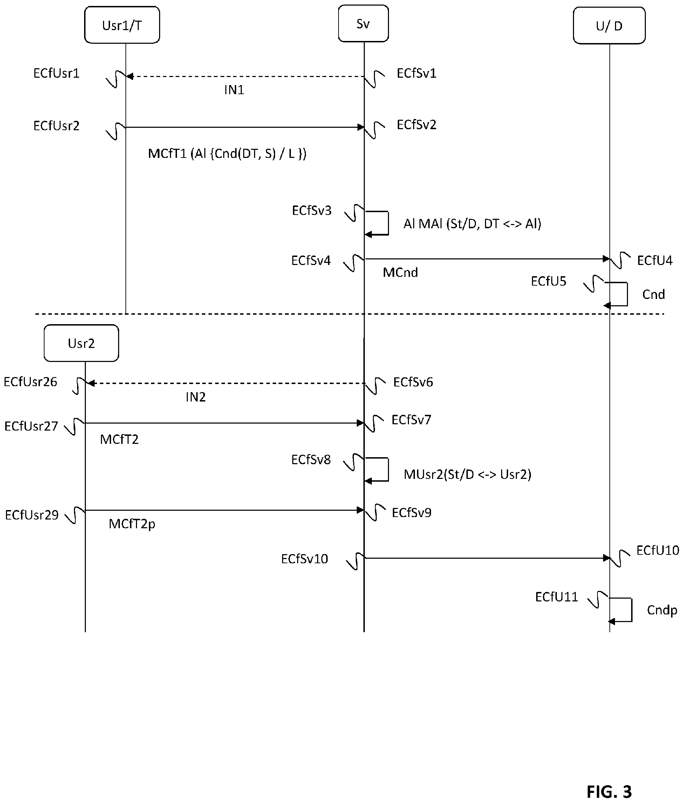

Nous allons à présent décrire un premier mode de réalisation d'un procédé de configuration d'une installation domotique SU en référence à la figure 3.

Dans une étape EcfSv1, le Serveur Sv met à disposition d'un premier utilisateur Usr1 du premier type UsrTl l'interface IN1, notamment pour la sélection des types de dispositifs / des paramètres ou variables d'état afin de permettre la configuration d'une Alerte Al et de la condition de déclenchement correspondante Cnd.

Dans une étape EcfUsr2, l'utilisateur Usr1 du premier type procède à la création et/ou la configuration d'une alerte Al.

Une alerte Al correspond au déclenchement d'une notification d'alerte N et/ou d'une action Ac lors de la réalisation d'une condition portant sur au moins une variable d'état S pour un dispositif D, un type de dispositif DT ou une liste de types de dispositifs DT si l'au moins une variable d'état S est supportés par les dispositifs concernés. Le premier utilisateur Usr1 dispose de droits étendus sur l'ensemble des dispositifs D ou types de dispositifs DT concernés par l'alerte Al afin de pouvoir créer et configurer celle-ci.

La condition de déclenchement Cnd de l'alerte Al peut être définie sous la forme d'une expression d'un langage évaluable, interprété ou compilé, par le serveur.

Ce langage peut être un langage simple permettant de décrire des expressions booléennes, en comprenant en particulier des opérateurs de comparaison et des opérateurs booléens, ou un langage de programmation complet.

La condition de déclenchement Cnd contient une référence à au moins une variable d'état S d'un dispositif D. La condition de déclenchement Cnd peut aussi prendre en compte une ou plusieurs variables externes, correspondant par exemple à une valeur affectée par défaut et personnalisable par instance de dispositif. La condition de déclenchement Cnd peut également prendre en compte des valeurs précédentes d'une ou plusieurs variables d'état de dispositifs D, en exploitant la capacité d'historisation du serveur Sv afin, par exemple, d'estimer une vitesse de variation en déterminant une dérivée ou de procéder à une détection d'anomalie par analyse statistique.

La condition de déclenchement Cnd peut être associée à une notion d'hystérésis temporelle ou d'hystérésis à effet de seuil sur la variation d'un ou plusieurs paramètres mesurés. Cette hystérésis permet de ne pas déclencher une alerte de façon abusive lorsque les paramètres mesurés sont sujets à fluctuation.

Une alerte AI peut être associée à un niveau d'alerte ou niveau de priorité de l'alerte ; A titre d'exemple, une alerte peut correspondre à un niveau d'information ou à une alerte concernant un problème bloquant sur l'installation.

Il est possible d'être notifié sur l'apparition de l'alerte mais aussi sur le retour à la normale en détectant lorsque la condition de déclenchement est remplie, mais également d'obtenir une notification d'alerte lorsque la condition cesse d'être remplie.

Il est possible de définir la condition de façon constante ou variable, par exemple avec un seuil variable T, associé optionnellement à une contrainte. Par exemple, le seuil pourrait être modifié entre les bornes d'un intervalle. Ces dispositions permettent une personnalisation comme cela sera décrit ultérieurement.

Une action Ac peut être définie en cas de réalisation de la condition, correspondant par exemple à un réglage / la mise en place d'un mode dégradé, ou encore une mise hors service ou un blocage du dispositif.

Une condition Cnd peut prendre en compte des données historiques sur une variable d'état afin de mettre en place un algorithme. Il est possible également de combiner plusieurs variables d'état S dans la condition.

Des exemples de conditions Cnd seront décrits ultérieurement.

Dans une étape EcfSrv3, le Serveur enregistre l'alerte Al ainsi qu'au moins une correspondance MAI entre ladite Alerte Al et les dispositifs D, groupes de dispositifs, type ou groupes de types de dispositifs DT, l'installation ou le groupe d'installations. Le serveur peut ainsi maintenir, à titre d'exemple, une ou plusieurs tables de correspondance entre des installations ou des dispositifs ou types de dispositifs et les alertes qui peuvent s'appliquer.

Le serveur Sv est par ailleurs configuré pour enregistrer une correspondance entre un type ou un identifiant de notification de réalisation d'une condition MNCnd, et une alerte correspondante.

Ainsi, la correspondance entre une alerte et une condition est prise en compte au niveau de l'unité de gestion.

Dans une étape ECfSv4, le serveur procède au téléchargement de la condition Cnd de l'alerte Al sur l'au moins une unité centrale de commande U à laquelle est rattachée au moins dispositif domotique D appartenant au groupe de dispositifs domotiques D en vue de la configuration du dispositif domotique pour l'évaluation de la condition Cnd et de l'émission d'une notification de réalisation de la condition MNCnd à destination de l'unité de gestion.

L'unité centrale de commande U reçoit le téléchargement dans une étape ECfU4.

Dans une étape EcfU5, l'unité centrale de commande U est configurée pour l'évaluation de la condition Cnd et l'émission d'une notification de réalisation de la condition MNCnd à destination de l'unité de gestion.

Dans une étape EcfSv6, le Serveur met à disposition l'interface utilisateur IN2 à au moins un utilisateur d'un deuxième type, notamment pour la sélection d'installations, de dispositifs / des paramètres ou variables d'état.

Le deuxième type d'utilisateur Usr2 correspond à un utilisateur qui peut s'abonner à une alerte. Il peut s'agir notamment d'un installateur ou d'un agent de maintenance qui possède des droits sur des dispositifs qu'il doit superviser, notamment à distance.

Optionnellement, une ou plusieurs alertes Al créées par un utilisateur du premier type peuvent être modifiées par un utilisateur du deuxième type UsrT2 pour les dispositifs D dont il a la supervision.

Dans une étape ECfUsr27, un utilisateur Usr2 possédant un profil d'un deuxième type procède à une déclaration des installations SU et ou des dispositifs D qu'il supervise de façon à constituer un ensemble de dispositifs domotiques . Cette étape de déclaration peut également être effectuée de façon automatique sur la base d'une liste d'utilisateurs du deuxième type et des dispositifs D et/ou installations SU associées.

Lors de cette étape, un utilisateur du deuxième type peut notamment procéder à la définition d'un mode de communication pour les notifications d'alerte, par exemple par SMS, par email, ou sur une interface de communication dédiée. Une combinaison de modes de communication peut également être envisagée. A titre d'exemple, une notification SMS ou email peut être envoyée avec un lien vers une page d'une interface de supervision.

L'utilisateur du deuxième type Usr2 peut également procéder à une définition des notifications d'alertes qu'il souhaite recevoir par type de dispositif DT mais également par instance de dispositif D supervisé. Cette définition correspond à une personnalisation du profil de l'utilisateur du deuxième type. L'utilisateur de deuxième type peut également procéder à une personnalisation des alertes sur les dispositifs dont il a la supervision, comme cela sera décrit ci-dessous.

Dans une étape ECfSv8, à réception du message de configuration MCfT2, le serveur procède à un enregistrement de la correspondance MUsr2 entre une installation SU ou un dispositif D et un utilisateur de deuxième type Usr2. Le serveur peut ainsi maintenir, à titre d'exemple, une ou plusieurs tables de correspondance entre des installations ou des dispositifs et les utilisateurs du deuxième type en charge de la supervision de ces dispositifs ou installations.

Dans une étape ECfUsr29, un utilisateur du deuxième type Usr2 peut procéder à une configuration personnalisée par dispositif D, par groupe de dispositif D ou par installation SU d'une alerte Al attachée à ce dispositif D, groupe de dispositif, Installation SU ou groupe d'installation. Dans ce cas, il convient que l'utilisateur du premier type ait donné la possibilité de modifier l'Alerte Al à des utilisateurs du deuxième type. A titre d'exemple, la configuration personnalisée peut correspondre à un choix de valeur de seuil dans une condition Cnd, en donnant une valeur de seuil personnalisée Tp. Cette personnalisation Cndp peut être stockée dans une étape ECfSv28 de façon liée à un dispositif avec la correspondance MAI, ou encore en lien avec l'utilisateur Usr2 en lien avec la correspondance MUsr.

Dans une étape ultérieure EcfSv10, le Serveur Sv procède à un téléchargement des conditions de déclenchement personnalisées sur l'unité centrale à laquelle est rattachée l'au moins un dispositif domotique D concerné.

Ces dispositions permettent de procéder à une évaluation de la condition directement sur l'unité centrale de commande, et de n'envoyer une notification de réalisation de la condition au serveur qu'en cas de réalisation de la condition, ce qui permet de limiter sensiblement les ressources nécessaires pour le traitement de la condition sur le serveur Sv et le trafic entre l'unité centrale U et le serveur Sv.

L'unité centrale de commande U reçoit le téléchargement dans une étape ECfU10.

Dans une étape EcfU11, l'unité centrale de commande U est configurée pour l'évaluation de la condition personnalisée Cndp et l'émission d'une notification de réalisation de la condition MNCndp à destination du Serveur Sv.

### Deuxième mode de mise en œuvre

Selon un deuxième mode de mise en œuvre non représenté, lorsqu'un dispositif domotique D est rattaché à une unité centrale de commande U, ou lors d'une mise en service ou mise à jour de ladite unité centrale de commande U, le rattachement du dispositif domotique D est signalé au Serveur Sv.

Le Serveur Sv peut alors déterminer les conditions Cnd des alertes déjà définies qui s'appliquent au dispositif domotique D, puis procéder au téléchargement de la condition Cnd correspondante, comme cela a été décrit précédemment.

Il est également possible ultérieurement de procéder à la définition d'une condition personnalisée Cndp, de façon similaire à ce qui a été décrit pour le premier mode de mise en œuvre.

### Procédé de supervision

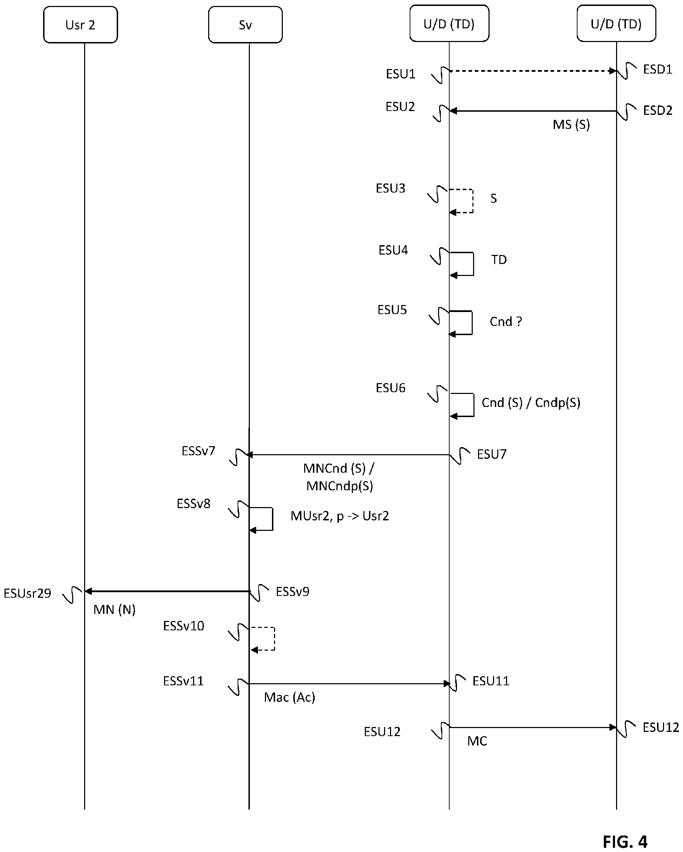

Nous allons à présent décrire un mode de réalisation d'un procédé de supervision d'une installation domotique SU en référence à la figure 4. Le procédé de configuration tel que décrit à la figure 3 a été précédemment exécuté.

Dans une étape ESU2, l'unité centrale de commande Sv reçoit un message de supervision MS émis par un dispositif domotique D dans une étape ESD2, le message de supervision MS comprenant une information relative à une valeur d'au moins un variable d'état S de l'au moins un dispositif domotique D. L'étape ESU2 peut être successive à une première étape ESU1 d'envoi d'un message d'interrogation ou de polling, reçu par le dispositif domotique D dans une étape ESD1. Alternativement, l'envoi du message MS peut être initié par le dispositif domotique D de façon autonome, par exemple en détectant un évènement modifiant la valeur d'une variable d'état S1D.

Dans une étape ESU3, l'unité centrale de commande U peut réaliser un stockage optionnel des valeurs de l'au moins une variable d'état S. Ce stockage historisé des valeurs de variables d'état peut être utile pour l'évaluation de conditions Cnd portant sur plusieurs variables qui ne sont pas envoyées en même temps, pour mettre en œuvre des algorithmes basés par exemple sur l'évolution des valeurs de la variable d'état S, sur le calcul de grandeurs statistiques, ou encore pour mettre en œuvre un mécanisme d'hystérésis.

Dans une étape ESU4, l'unité centrale de commande U procède à une identification du type DT de dispositif. Cette identification du type peut être basée par exemple sur une consultation d'une information envoyée dans le message de supervision, comme un identifiant. A titre d'exemple les données de l'identifiant unique DURL peuvent être utilisées.

Dans une étape ESU5, l'unité centrale de commande U procède à une détermination des conditions Cnd, Cndp à évaluer, sur la base du type TD du dispositif D.

Les étapes ESU4 et/ou ESU5 peuvent être optionnelles dans la mesure ou un seul type de dispositif est rattaché à l'unité centrale de commande U, ou respectivement, dans le cas où une seule condition est à évaluer.

Dans une étape ESU6, l'unité centrale de commande U procède à l'évaluation la condition Cnd ou Cndp.

Dans le cas où la condition est remplie et qu'une notification de réalisation de la condition MNCnd ou MNCndp doit être envoyée, cette notification peut être optionnellement associée à un contexte, ou des valeurs à communiquer, et/ou à un niveau d'alerte.

Dans une étape ESU7, une notification de réalisation de la condition MNCnd ou MNCndp est envoyée au Serveur Sv, qui reçoit cette notification dans une étape ESSv7.

Dans une étape ESSv8, le serveur Sv détermine le message de notification d'alerte en fonction de la définition de l'alerte correspondante Al et du ou des utilisateurs de deuxième type Usr2 à notifier en fonction de La correspondance entre le dispositif D ou l'installation et l'utilisateur. Par ailleurs, la notification d'alerte est envoyée ou non en fonction de la configuration propre à l'utilisateur Usr2 qui souhaite ou non recevoir une alerte.

Dans une étape Essv9, le Serveur Sv procède à l'envoi d'au moins un message de notification d'alerte MN. Ce message de notification d'alerte MN est reçu par l'utilisateur dans une étape ESUsr29.

Dans une étape ESSv10, le serveur peut procéder optionnellement à une sauvegarde du déclenchement de l'alerte pour constituer un historique des alertes.

Dans une étape ESSv11, le serveur peut procéder à l'envoi d'un message Mac à l'unité centrale de commande U en vue du déclenchement de l'exécution d'une action Ac, en particulier d'une action sur le dispositif domotique D. Ce message est reçu dans une étape ESU11 par l'unité centrale de commande U. Par action, il peut notamment être entendu une commande sur un dispositif D.

Dans une étape ESSv11, l'unité centrale de commande U envoie un message de commande MC au dispositif domotique pour que celui-ci exécute la commande correspondant à l'action.

### Exemples de conditions de déclenchement d'alerte

Quelques exemples de conditions Cnd utilisées dans des alertes Al sont décrits ci-dessous.

### Exemple 1

Selon un premier exemple, la condition Cnd de déclenchement d'une alerte Al a pour objet la détection de problèmes d'allumage sur un dispositif D constitué par une chaudière domestique.

Ainsi, la condition de déclenchement Cnd peut être définie comme :
*Na > NaT*
Avec
Na : Nombre de tentatives consécutives nécessaires pour que la combustion démarre lors du dernier allumage.
NaT : seuil d'alerte, par exemple égal à 3.
Cette condition Cnd définit que si la valeur de Na dépasse le seuil NaT, l'alerte Al est déclenchée.
Ce type de condition Cnd permet de détecter des ratées à l'allumage sur la chaudière, indiquant une usure du système d'allumage nécessitant un remplacement avant aggravation et panne totale.

### Exemple 2

Selon un deuxième exemple, la condition Cnd de déclenchement d'une alerte Al a pour objet le suivi du fonctionnement d'un dispositif D constitué par une chaudière domestique.

Ainsi, la condition de déclenchement Cnd peut être définie comme :
*T > $Tmax pendant une période P*
avec
T : Température du corps de chauffe. Cette température est une variable d'état ou paramètre du dispositif dont la valeur est rafraîchie toutes les minutes
$TMax : Température seuil. Cette valeur de seuil est une variable externe qui peut par exemple être définie par défaut à une valeur de 90°C par les préconisations du constructeur.
P : période de temps, par exemple de 10 minutes.
La condition ci-dessus utilise un « hystérésis » pendant une période de temps P. Ainsi, si la valeur de T dépasse $TMax sur une période ininterrompue d'au moins P, l'alerte est déclenchée.

### Exemple 3

Selon un troisième exemple, la condition Cnd a pour objet la détection d'effort anormal sur un dispositif D constitué par une porte de garage motorisée.

Ainsi, la condition de déclenchement Cnd peut être définie comme :
*Nt > NtT et Im > ImT*
avec
Nt : Nombre de cycles d'ouverture/fermeture du dispositif depuis sa sortie d'usine.
$Ntmax : Seuil d'utilisation, par exemple de l'ordre de 100.
Im : Valeur maximum atteinte par l'intensité électrique dans le moteur du dispositif (en ampères) lors du dernier cycle.
$Immax : Seuil d'alerte d'intensité, par exemple égal à 8 A.
La condition Cnd comprend deux sous-conditions cumulatives. La sous-condition sur Nt permet d'éviter des faux positifs pendant la phase d'installation et de rodage du dispositif.
Par la suite, si le dispositif a effectué au moins NtT cycles d'ouverture et que le courant d'appel du moteur électrique dépasse ImT, l'alerte Al est déclenchée.
Ce type de condition Cnd permet de détecter un effort anormal du dispositif pouvant réduire sa durée de vie ou précédant un blocage complet.

### Exemple 4

Selon un quatrième exemple, la condition Cnd a pour objet le suivi de consommation d'acide d'un dispositif domotique D de type régulateur automatique de pH pour piscine.

Ainsi, la condition de déclenchement Cnd peut être définie comme :
*d(Qa) > $Cmax pendant une période P*
avec
Qa : Quantité d'acide consommée en ml (index absolu, rafraîchi toutes les 30 minutes)
d(Qa) : Taux de consommation d'acide en ml par heure, calculé par dérivée sur les 8 dernières heures (en utilisant les valeurs stockées par le serveur toutes les 30 minutes)
$Cmax : Taux de consommation seuil en ml par heure : variable externe de valeur par défaut = 10mL/h
P : période de temps, par exemple 8 minutes.
Si la consommation en volume d'acide est supérieure à $Cmax ml/h sur les P dernières heures, l'alerte est déclenchée.
Ce type de condition permet de détecter une situation de régulation anormale entrainant une surconsommation, qui peut indiquer un problème de réglage ou une détérioration du dispositif.

### Configuration personnalisée

Selon une possibilité, dans les différents exemples décrits ci-dessus, le premier utilisateur du premier type UsrT1 peut définir que les seuils définis sont réglables par un utilisateur du deuxième type UsrT2, par exemple réglables dans une plage de valeurs déterminées par l'utilisateur du premier type UsrT1.

## Revendications

1. Procédé de configuration d'une unité de gestion (Sv) reliée à au moins une installation domotique (SU) comprenant au moins un dispositif domotique (D), un groupe de dispositifs domotiques (D), un type de dispositif domotique (DT) ou un groupe de types de dispositifs domotiques (DT), et au moins une unité centrale de commande (U), le procédé étant mis en œuvre par l'unité de gestion (Sv) et étant **caractérisé en ce qu'**il comprend les étapes suivantes :
- Configuration (EcfSv2) d'une alerte (Al) correspondant au déclenchement d'une notification d'alerte (N) et/ou d'une action (Ac) lors de la réalisation d'une condition de déclenchement (Cnd, Cndp) portant sur au moins une variable d'état (S) pour l'au moins un dispositif domotique (D), le groupe de dispositifs domotiques (D), le type de dispositif domotique (DT) ou le groupe de types de dispositifs domotiques (DT); l'étape de configuration d'une alerte (Al) étant réalisée sur la base d'au moins une instruction d'un premier utilisateur (Usr1) possédant un profil utilisateur d'un premier type (UsrT1) ;
- Enregistrement (EcfSv3) d'une première correspondance (MAI) entre l'alerte (Al) et l'au moins un dispositif domotique (D), le groupe de dispositifs domotiques (D), le type de dispositif domotique (DT) ou le groupe de types de dispositifs domotiques (DT) ;
- Enregistrement d'une déclaration (ECfUsr27) de supervision d'un ensemble de dispositifs domotiques (D), comprenant l'au moins un dispositif domotique (D), le groupe de dispositifs domotiques (D), le type de dispositif domotique (DT) ou le groupe de types de dispositifs domotiques (DT), par un deuxième utilisateur (Usr2) possédant un profil utilisateur d'un deuxième type (UsrT2) ;
- Enregistrement (ECfSv8) d'une deuxième correspondance (MUsr) entre l'au moins un dispositif domotique (D), le groupe de dispositifs domotiques (D), le type de dispositif domotique (DT) ou le groupe de types de dispositifs domotiques (DT), appartenant à l'ensemble de dispositifs domotiques (D), et le deuxième utilisateur (Usr2) ;
- Téléchargement (EcfSv4, ECfSv10) de la condition de déclenchement (Cnd/Cndp) de l'alerte (Al) sur l'au moins une unité centrale de commande (U) à laquelle est rattachée l'au moins un dispositif domotique (D), l'au moins un dispositif domotique (D), le groupe de dispositifs domotiques (D), le type de dispositif domotique (DT) ou le groupe de types de dispositifs domotiques (DT), pour lequel l'alerte (Al) a été configurée, en vue de la configuration de l'unité centrale de commande (U) pour l'évaluation de la condition (Cnd/Cndp) et de l'émission d'une notification de réalisation de la condition (NCnd/NCdnp) à destination de l'unité de gestion (Sv).

2. Procédé de configuration selon la revendication 1, comprenant en outre l'étape suivante :
- Définition (ECfUsr29) d'une configuration personnalisée (Cndp) d'une alerte (Al) attachée à l'au moins un dispositif domotique (D), le groupe de dispositifs domotiques (D), le type de dispositif domotique (DT) ou le groupe de types de dispositifs domotiques (DT), par le deuxième utilisateur (Usr2) possédant un profil utilisateur d'un deuxième type (UsrT2).

3. Procédé de configuration selon l'une quelconque des revendications 1 à 2, comprenant en outre l'étape suivante :
- Mise à disposition (EcfSv1) de l'utilisateur (Usr1) possédant un profil d'un premier type (UsrT1) d'une première interface (GUI1) de configuration d'une Alerte (Al) et de la condition de déclenchement correspondante (Cnd).

4. Procédé de configuration selon l'une quelconque des revendications 1 à 3, comprenant en outre l'étape suivante :
- Mise à disposition (EcfSv6) de l'utilisateur (Usr2) possédant un profil d'un deuxième type (UsrT2) d'une deuxième interface (IN2) de sélection d'installations, de dispositifs / des paramètres ou variables d'état.

5. Procédé de supervision d'une installation domotique (SU) comprenant au moins un dispositif domotique (D) rattaché à une unité centrale de commande (U), le procédé étant exécuté par une unité de gestion (Sv) reliée à ladite installation (SU) et comprenant les étapes suivantes :
- Réception (ESSv7) d'un message de notification de réalisation d'une condition (MNCmd, MNCndp) en provenance de l'unité centrale de commande (U), le message de notification de réalisation d'une condition (MNCmd, MNCndp) correspondant à une réalisation d'une condition de déclenchement (Cnd) d'une notification d'alerte (N) et/ou d'une action (Ac) correspondant à une alerte (AI), l'alerte (AI) ayant été configurée selon l'une quelconque des revendications 1 à 6 du procédé de configuration;
- Détermination (ESSv8) d'au moins un deuxième utilisateur (Usr2) d'un deuxième type à notifier en fonction d'une correspondance entre l'au moins un dispositif (D) et ledit deuxième utilisateur (Usr2);
- Emission (Essv9) d'au moins un message de notification d'alerte (MN) à destination de l'au moins un deuxième utilisateur (Usr2).

6. Procédé de supervision selon la revendication 5, comprenant l'étape suivante :
- Vérification de l'existence d'une configuration propre au deuxième utilisateur (Usr2) concernant un souhait de réception de notification d'alerte afin de déterminer si une notification d'alerte est envoyée ou non.

7. Procédé de supervision selon l'une quelconque des revendications 5 à 6, comprenant l'étape suivante :
- Envoi (ESSv11) d'un message (Mac) à l'unité centrale de commande U en vue du déclenchement de l'exécution d'une action, en particulier d'une action sur le dispositif domotique (D).

8. Procédé de supervision selon l'une des revendications 5 à 7, comprenant l'étape suivante :
- Stockage (ESU3) des valeurs de l'au moins une variable d'état (S).

## Patentansprüche

1. Verfahren zum Konfigurieren einer Verwaltungseinheit (Sv), die mit mindestens einer Heimautomatisierungsausrüstung (SU) verbunden ist, die mindestens eine Heimautomatisierungsvorrichtung (D), eine Gruppe von Heimautomatisierungsvorrichtungen (D), einen Heimautomatisierungsvorrichtungstyp (DT) oder eine Gruppe von Heimautomatisierungsvorrichtungstypen (DT) und mindestens eine zentrale Steuereinheit (U) umfasst, wobei das Verfahren von der Verwaltungseinheit (Sv) durchgeführt wird und **dadurch gekennzeichnet ist, dass** es die folgenden Schritte umfasst:
- Konfigurieren (EcfSv2) einer Warnung (AI), die dem Auslösen einer Warnbenachrichtigung (N) und/oder einer Aktion (Ac) bei der Erfüllung einer auslösenden Bedingung (Cnd, Cndp) entspricht, die sich auf mindestens eine Zustandsvariable (S) für die mindestens eine Heimautomatisierungsvorrichtung (D), die Gruppe von Heimautomatisierungsvorrichtungen (D), den Heimautomatisierungsvorrichtungstyp (DT) oder die Gruppe von Heimautomatisierungsvorrichtungstypen (DT) bezieht; wobei der Schritt des Konfigurierens einer Warnung (AI) auf der Basis von mindestens einem Befehl eines ersten Benutzers (Usr1) durchgeführt wird, der ein Benutzerprofil eines ersten Typs (UsrT1) besitzt;
- Speichern (EcfSv3) einer ersten Übereinstimmung (MAI) zwischen der Warnung (AI) und der mindestens einen Heimautomatisierungsvorrichtung (D), der Gruppe von Heimautomatisierungsvorrichtungen (D), dem Heimautomatisierungsvorrichtungstyp (DT) oder der Gruppe von Heimautomatisierungsvorrichtungstypen (DT);
- Speichern einer Überwachungserklärung (ECfUsr27) einer Einheit von Heimautomatisierungsvorrichtungen (D), die die mindestens eine Heimautomatisierungsvorrichtung (D), die Gruppe von Heimautomatisierungsvorrichtungen (D), den Heimautomatisierungsvorrichtungstyp (DT) oder die Gruppe von Heimautomatisierungsvorrichtungstypen (DT) umfasst, durch einen zweiten Benutzer (Usr2), der ein Benutzerprofil eines zweiten Typs (UsrT2) besitzt;
- Speichern (ECfSv8) einer zweiten Übereinstimmung (MUsr) zwischen der mindestens einen Heimautomatisierungsvorrichtung (D), der Gruppe von Heimautomatisierungsvorrichtungen (D), dem Heimautomatisierungsvorrichtungstyp (DT) oder der Gruppe von Heimautomatisierungsvorrichtungstypen (DT), die zu der Einheit von Heimautomatisierungsvorrichtungen (D) gehört, und dem zweiten Benutzer (Usr2);
- Laden (EcfSv4, ECfSv10) der auslösenden Bedingung (Cnd/Cndp) der Warnung (AI) auf die mindestens eine zentrale Steuereinheit (U), der die mindestens eine Heimautomatisierungsvorrichtung (D), die mindestens eine Heimautomatisierungsvorrichtung (D), die Gruppe von Heimautomatisierungsvorrichtungen (D), der Heimautomatisierungsvorrichtungstyp (DT) oder die Gruppe von Heimautomatisierungsvorrichtungstypen (DT), für die die Warnung (AI) konfiguriert wurde, zugeordnet ist, zwecks Konfigurieren der zentralen Steuereinheit (U) zur Evaluierung der Bedingung (Cnd/Cndp) und Sendung einer Benachrichtigung der Erfüllung der Bedingung (NCnd/NCdnp) an die Verwaltungseinheit (Sv).

2. Konfigurationsverfahren nach Anspruch 1, umfassend ferner den folgenden Schritt:
- Definieren (ECfUsr29) einer personalisierten Konfiguration (Cndp) einer Warnung (AI), die der mindestens einen Heimautomatisierungsvorrichtung (D), der Gruppe von Heimautomatisierungsvorrichtungen (D), dem Heimautomatisierungsvorrichtungstyp (DT) oder der Gruppe von Heimautomatisierungsvorrichtungstypen (DT), zugeordnet ist, durch den zweiten Benutzer (Usr2), der ein Benutzerprofil eines zweiten Typs (UsrT2) besitzt.

3. Konfigurationsverfahren nach einem der Ansprüche 1 bis 2, umfassend ferner den folgenden Schritt:
- Bereitstellen (EcfSv1) für den Benutzer (Usr1), der ein Profil eines ersten Typs (UsrT1) besitzt, einer ersten Konfigurationsschnittstelle (GUI1) einer Warnung (AI) und der entsprechenden auslösenden Bedingung (Cnd).

4. Konfigurationsverfahren nach einem der Ansprüche 1 bis 3, umfassend ferner den folgenden Schritt:
- Bereitstellen (EcfSv6) für den Benutzer (Usr2), der ein Profil eines zweiten Typs (UsrT2) besitzt, einer zweiten Schnittstelle (IN2) zur Auswahl von Ausrüstungen, Vorrichtungen / Parametern oder Zustandsvariablen.

5. Verfahren zur Überwachung einer Heimautomatisierungsausrüstung (SU), umfassend mindestens eine Heimautomatisierungsvorrichtung (D), die einer zentralen Steuereinheit (U) zugeordnet ist, wobei das Verfahren von einer Verwaltungseinheit (Sv) ausgeführt wird, die mit der Ausrüstung (SU) verbunden ist und die folgenden Schritte umfasst:
- Empfangen (ESSv7) einer Benachrichtigungsmeldung über die Erfüllung einer Bedingung (MNCmd, MNCndp) von der zentralen Steuereinheit (U), wobei die Benachrichtigungsmeldung über die Erfüllung einer Bedingung (MNCmd, MNCndp) einer Erfüllung einer auslösenden Bedingung (Cnd) für eine Warnbenachrichtigung (N) und/oder eine Aktion (Ac) entspricht, die einer Warnung (AI) entspricht, wobei die Warnung (AI) nach einem der Ansprüche 1 bis 6 des Konfigurationsverfahrens konfiguriert wurde;
- Bestimmen (ESSv8) mindestens eines zweiten Benutzers (Usr2) eines zweiten Typs, der in Abhängigkeit von einer Übereinstimmung zwischen der mindestens einen Vorrichtung (D) und dem zweiten Benutzer (Usr2) zu benachrichtigen ist;
- Senden (Essv9) mindestens einer Warnbenachrichtigungsmeldung (MN) an den mindestens einen zweiten Benutzer (Usr2).

6. Überwachungsverfahren nach Anspruch 5, umfassend den folgenden Schritt:
- Überprüfen des Vorhandenseins einer für den zweiten Benutzer (Usr2) speziellen Konfiguration bezüglich eines Wunsches, eine Warnbenachrichtigung zu empfangen, um zu festzustellen, ob eine Warnbenachrichtigung gesendet wurde oder nicht.

7. Überwachungsverfahren nach einem der Ansprüche 5 bis 6, umfassend den folgenden Schritt:
- Senden (ESSv11) einer Meldung (Mac) an die zentrale Steuereinheit U zwecks Auslösens der Durchführung einer Aktion, insbesondere einer Aktion auf die Heimautomatisierungsvorrichtung (D).

8. Überwachungsverfahren nach einem der Ansprüche 5 bis 7, umfassend den folgenden Schritt:
- Speichern (ESU3) der Werte der mindestens einen Zustandsvariablen (S).

## Claims

1. A method for configuring a management unit (Sv) connected to at least one home automation installation (SU) comprising at least one home automation device (D), a group of home automation devices (D), one home automation device type (DT) or one group of home automation device types (DT), and at least one central control unit (U), the method being implemented by the management unit (Sv) and being **characterized in that** it comprises the following steps:
- Configuring (EcfSv2) an alert (Al) corresponding to the triggering of an alert notification (N) and/or an action (Ac) during the fulfilling of a trigger condition (Cnd, Cndp) relating to at least one state variable (S) for the at least one home automation device (D), the group of home automation devices (D), the home automation device type (DT) or the group of home automation device types (DT); the step of configuring an alert (Al) being carried out on the basis of at least one instruction from a first user (Usr1) having a user profile of a first type (UsrT1);
- Recording (EcfSv3) a first correspondence (MAI) between the alert (Al) and the at least one home automation device (D), the group of home automation devices (D), the home automation device type (DT) or the group of home automation device types (DT);
- Recording a declaration (ECfUsr27) of the supervision of a home automation devices set (D), comprising the at least one home automation device (D), the group of home automation devices (D), the home automation device type (DT) or the group of home automation device types (DT), by a second user (Usr2) having a user profile of a second type (UsrT2);
- Recording (ECfSv8) a second correspondence (MUsr) between the at least one home automation device (D), the group of home automation devices (D), the home automation device type (DT) or the group of home automation device types (DT), belonging to the set of home automation devices (D), and the second user (Usr2);
- Downloading (EcfSv4, ECfSv10) the trigger condition (Cnd/Cndp) of the alert (Al) on the at least one central control unit (U) to which the at least one home automation device (D) is attached, the at least one home automation device (D), the group of home automation devices (D), the home automation device type (DT) or the group of home automation device types (DT), for which the alert (Al) has been configured, with a view to configure the central control unit (U) for the evaluation of the condition (Cnd/Cndp) and the emission of a notification of the fulfillment of the condition (NCnd/NCdnp) to destination of the management unit (Sv).

2. The configuration method according to claim 1, further comprising the following step:
- Defining (ECfUsr29) a customized configuration (Cndp) of an alert (Al) related to the at least one home automation device (D), the group of home automation devices (D), the home automation device type (DT) or the group of home automation device types (DT), by the second user (Usr2) having a user profile of a second type (UsrT2).

3. The configuration method according to any one of claims 1 to 2, further comprising the following step:
- Providing (EcfSv1) the user (Usr1) having a profile of a first type (UsrT1) with a first interface (GUI1) for configuring an alert (Al) and with the corresponding trigger condition (Cnd).

4. The configuration method according to any one of claims 1 to 3, further comprising the following step:
- Providing (AcfSv6) the user (Usr2) having a profile of a second type (UsrT2) with a second interface (IN2) for selecting installations, devices/parameters or state variables.

5. A method for supervising a home automation installation (SU) comprising at least one home automation device (D) and at least one central control unit (U), the method being executed by a management unit (Sv) connected to said installation (SU) and comprising the following steps of:
- Receiving (ESSv7) a condition fulfillment notification message (MNCmd, MNCndp) from the central control unit (U), the condition fulfillment notification message (MNCmd, MNCndp) corresponding to a fulfilling of a triggering condition (Cnd) of an alert notification (N) and/or of an action (Ac) corresponding to an alert (Al), the alert (Al) having been configured according to any one of claims 1 to 6 of the configuration method;
- Determining (ESSv8) at least one second user (Usr2) of a second type to be notified according to a correspondence between the at least one device (D) and said second user (Usr2);
- Transmitting (Essv9) at least one alert notification message (MN) intended for the at least one second user (Usr2).

6. The supervision method according to claim 5, comprising the following step:
- Verifying the existence of a second user-specific configuration (Usr2) concerning a wish to receive notification in order to determine whether an alert notification is sent or not.

7. The supervision method according to any one of claims 5 to 6, comprising the following step:
- Sending (ESSv11) a message (Mac) to the central control unit U for triggering the execution of an action, in particular an action on the home automation device (D).

8. The supervision method according to any of claims 5 to 7, comprising the following step:
- Storing (ESSv3) the values of the at least one state variable (S).
